# EUROPEAN PATENT APPLICATION

(11) **EP 3 163 842 A1**
(43) Date of publication of application: **03.05.2017**
(21) Application number: 14895743.4
(22) Date of filing: 15.09.2014
(51) Int. Cl.: H04L 29/08, H04M 3/523, H04M 3/527

(54) **CLOUD CONTACT CENTRE AND CLOUDIZATION METHOD FOR CONTACT CENTRE**

(30) Priority: 24.06.2014 CN 201410290746
(71) Applicant: ZTE Corporation, Shenzhen, Guangdong 518057 (CN)
(72) Inventor: YU, Moushan, Shenzhen Guangdong 518057 (CN); YE, Wei, Shenzhen Guangdong 518057 (CN)
(74) Representative: HGF Limited
(86) International application number: PCT/CN2014/086552
(87) International publication number: WO 2015/196579

(57) **Abstract**

The present invention provides a cloud contact center and a cloudization method for a contact center. The cloud contact center includes: an access cloud, arranged to: provide an enterprise with a service of applying for access accounts of a plurality of types of interactive platforms; a service cloud, in which the access accounts which have already been applied by the enterprise are recorded, arranged to: provide a user with a service of querying the access accounts of the plurality of types of interactive platforms which have been applied by the enterprise; and a platform cloud, arranged to: provide the enterprise with a service of allocating contact center services to the access accounts of the plurality of types of interactive platforms which have already been applied, enable the user to establish contacts with corresponding access accounts which have already been applied by the enterprise via the plurality of types of interactive platforms and obtain corresponding contact center services. In the solution of the present invention, the contact center services of various interactive platforms are intensively managed, thereby saving operation costs of an enterprise. On the other hand, it is convenient for the user to learn access accounts of the enterprise for various interactive platforms, and the user is enabled to select an appropriate interactive platform to acquire an appropriate contact center service.

## Description

### Technical Field

The present invention relates to the cloud service field, and in particular, to a cloud contact center and a cloudization method for a contact center.

### Background of the Related Art

In the existing enterprise contact center system, there are mainly two types of services. One is the traditional voice access, in which the enterprise applies for activating a number to the telecom operator, a user gets access through the traditional telecom network signaling, and at the same time, it is required to pay the rental fee of the number and bear the corresponding cost since that type of service uses a physical number of the telecom operator. The other is an Internet based service such as webchat, webcall, WeChat, micro-blog and other services, the enterprise personnel can support the services through the platform provided by the Internet enterprise, the user gets access through a PC or a mobile terminal, and that type of service is easier to be applied and developed by the enterprise, and the cost is relatively low.

If the enterprise establishes the contact center which needs to use the traditional telephone voice, then it is required to apply for access resources to the operator, of which the opening cycle is longer, and if the platform only uses the voice service, then there is a situation that the voice cost is high. If the enterprise wants to develop the voice and Internet services, then it is not only required to apply for the telecom access from the telecom operator, but also required to apply for the multimedia access from the Internet and other manufacturers, and the enterprise needs to bear the cost of being unable to perform uniform management. While for the user, different information is required to be remembered by contact with the enterprise through the voice and/or through the Internet, such as, an access number, a WeChat or micro-blog number, etc. Because it is not convenient to remember, it is resulted that a large number of users will only contact the enterprises through the traditional voice call modes, which will also increase the burden of the enterprises.

### Content of the Invention

The technical problem that the embodiment of the present invention at least requires to solve is to provide a cloud contact center and a cloudization method for a contact center, which can reduce the cost of opening the contact center of the enterprise and facilitate the user to contact the enterprise.

In order to solve the above technical problem, the embodiment of the present invention provides a cloud contact center, comprising:
an access cloud, arranged to: provide an enterprise with a service of applying for access accounts of a plurality of types of interactive platforms;
a service cloud, in which the access accounts which have already been applied by the enterprise are recorded, arranged to: provide a user with a service of querying the access accounts of the plurality of types of interactive platforms which have been applied by the enterprise; and
a platform cloud, arranged to: provide the enterprise with a service of allocating contact center services to the access accounts of the plurality of types of interactive platforms which have already been applied, enable the user to establish contacts with corresponding access accounts which have already been applied by the enterprise via the plurality of types of interactive platforms and obtain corresponding contact center services.

Herein, the contact center service includes a manual service; and the cloud contact center further includes:
a seat cloud, with multiple seats, arranged to provide the enterprise with a service of binding a communication terminal of a seat staff with the seat; and
the platform cloud specifically providing the enterprise with a service of allocating the manual service to the assess accounts which have already been applied by the enterprise, a service of binding the access accounts which have already been applied by the enterprise allocated with the manual service with the seat of the seat cloud, and a service of configuring a queuing policy required for the user to contact the access accounts which have already been applied by the enterprise and are allocated with the manual service.

Herein, the contact center service includes a self-service; and
the platform cloud specifically provides the enterprise with a service of allocating the self-service to the assess accounts which have already been applied by the enterprise, and a service for configuring procedures of the self-service.

Herein, the interactive platform includes: a physical telephone, a soft telephone and a network communication application.

Herein,
the platform cloud further provides the enterprise with a service of monitoring an operation situation of the contact center service, and a service of uploading a report of the operation situation of the contact center service.

In addition, the embodiment of the present invention further provides a cloudization method for a contact center, comprising:
providing an enterprise with a service of applying for access accounts of a plurality of types of interactive platforms;
recording the access accounts which have already been applied by the enterprise and providing a user with a service of querying the access accounts of the plurality of types of interactive platforms which have been applied by the enterprise; and
providing the enterprise with a service of allocating contact center services to the access accounts of the plurality of types of interactive platforms which have already been applied, enabling the user to establish contacts with corresponding access accounts which have already been applied by the enterprise via the plurality of types of interactive platforms and obtaining corresponding contact center services. Herein, the contact center service includes a manual service; and the method further includes:
   providing multiple seats, and providing the enterprise with a service of binding a communication terminal of a seat staff with the seat; and
   the providing the enterprise with a service of allocating contact center services to the access accounts of the plurality of types of interactive platforms which have already been applied includes:
      providing the enterprise with a service of allocating the manual service to the assess accounts which have already been applied by the enterprise, a service of binding the access accounts which have already been applied by the enterprise allocated with the manual service with the seat of the seat cloud, and a service of configuring a queuing policy required for the user to contact the access accounts which have already been applied by the enterprise and are allocated with the manual service.

Herein, the contact center service includes a self-service; and
the providing the enterprise with a service of allocating contact center services to the access accounts of the plurality of types of interactive platforms which have already been applied includes:
providing the enterprise with a service of allocating the self-service to the assess accounts which have already been applied by the enterprise, and a service for configuring procedures of the self-service.

Herein, the interactive platform includes: a physical telephone, a soft telephone and a network communication application.

Herein, the above method further includes:
further providing the enterprise with a service of monitoring an operation situation of the contact center service, and a service of uploading a report of the operation situation of the contact center service.

The beneficial effects of the above technical scheme of the embodiment of the present invention are as follows:
for the enterprise, in the solution of the present invention, the contact center services of various interactive platforms are intensively managed, thereby saving operation costs of an enterprise; while for the user, the scheme of the present invention is convenient for the user to learn access accounts of the enterprise for various interactive platforms, and the user is enabled to select an appropriate interactive platform to acquire an appropriate contact center service.

### Brief Description of Drawings

FIG. 1 is a framework diagram of a cloud contact center of the present invention;
FIG. 2 is a diagram of steps of activating contact center service based on the cloud contact center of the present invention;
FIG. 3 is a diagram of steps of acquiring contact center service based on the cloud contact center of the present invention;
FIG. 4 is a diagram of steps of a cloudization method for a contact center of the present invention.

### Preferred Embodiments of the Present Invention

In order to make the technical problem to be solved, the technical scheme and the advantage of the present invention much more clear and obvious, it will be described in detail with reference to the accompanying drawings and the specific embodiments hereinafter.

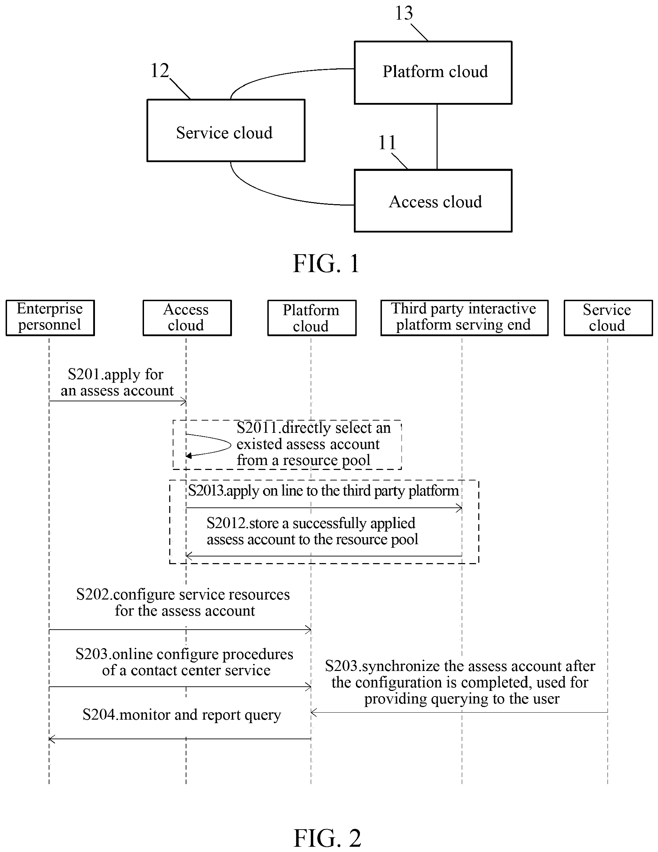

The cloud contact center provided by the embodiment of the present invention includes the following as shown in FIG. 1:
an access cloud 11 is arranged to: provide an enterprise with a service of applying for access accounts of a plurality of types of interactive platforms.

Specifically, the access cloud includes multiple interfaces of interactive platform server, and the enterprise personnel can access the interactive platform server through the interfaces, and apply for the access account; for example, the enterprise personnel can apply for a WeChat access account through an interface of the WeChat server, and also can apply for a physical phone account through an interface of the telecom operation server.

A service cloud, recorded with the access accounts which are already applied by the enterprise, is arranged to: provide a user with a service of querying the access accounts of the plurality of types of interactive platforms which are applied by the enterprise.

Specifically, the service cloud will intensively record the access accounts of various interactive platforms activated by the enterprise. The user can know the contact modes set by the enterprise at various interactive platforms through the service cloud. Exemplarily, the service cloud can provide a query service to the user through a web page or a specific application.

A platform cloud 13 is arranged to provide the enterprise with a service of allocating contact center services to the access accounts of the plurality of types of interactive platforms which are already applied, enable the user to establish contacts with the access accounts which are applied by the corresponding enterprise via the plurality of types of interactive platforms and obtain the corresponding contact center services.

Specifically, the cloud platform can be regarded as an integration enterprise general information service system platform which integrates a plurality of types of interactive platforms, on the basis of the traditional call center, and based on a computer telephony integration technology (CTI) and a cloud computing technology. That is, the platform cloud intensively manages the contact center services corresponding to various interactive platforms for the enterprise.

It can be seen from the above descriptions, for the enterprise, the cloud contact center of the embodiment of the present invention intensively manages the contact center services of various interactive platforms, thereby saving the operation costs of the enterprise. While for the user, the cloud contact center of the embodiment of the present invention is convenient for the user to learn access accounts of the enterprise for various interactive platforms, and the user is enabled to select an appropriate interactive platform to acquire an appropriate contact center service.

The contact center services are divided into two types currently: one is a manual service, interacted by the staff with the user; and another is a self-service, and the service is completed by the user self according to a notice.

For the manual service, the cloud contact center of the embodiment of the present invention further includes:
a seat cloud, with multiple seats, arranged to provide the enterprise with a service of binding a communication terminal of a staff with the seat; and
in fact, a seat is a place of work in the enterprise, which can be corresponding to multiple staffs to take turns on duty. The seat cloud allocates the seats for the staffs to manage the staff shift. In the specific implementation, the seat cloud can be an application server, the staff logs in his own IP through a seat software on his own communication terminal, and the application server binds the seat job number to the seat software of logging in the IP, and then realizes the binding of the communication terminal with the seat job number. Herein, the communication device can be a PC, a mobile phone, a PAD, etc. Exemplarily, when the staff goes out, the staff can log in his own IP by using the seat software on the mobile phone, so as to realize working on the mobile phone; or, when the staff is at home, he can log in his own IP through the seat software on the home PC, to realize working at home.

Obviously, the seat cloud of the embodiment of the present invention can make staff away from being limited by the office space, therefore, it has very high practical value. In addition, the seat cloud can uniformly manage the staffs of various interactive platforms, such as, traditional receptionist and currently popular network service, etc., thus saving the operation cost of the enterprise.

Herein, the platform cloud specifically provides the enterprise with a service of allocating the manual service to the assess accounts which are already applied by the enterprise; and a service of binding the access accounts which are already applied by the enterprise allocated with the manual service with the seat of the seat cloud, and a service of configuring a queuing policy required by the user contacting the access accounts which are already applied by the enterprise allocated with the manual service. Exemplarily, the cloud platform can select the access account for answering the pre-sales service of the user, and binds the seat responsible for the pre-sales service with the access account, therefore, the user can communicate with the staff responsible for the pre-sales through contacting the assess account of the pre-sales. In addition, the enterprise personnel can also set multiple seats for the pre-sales service through the platform cloud, herein, the seats can be concurrent interactive platforms, such as, a telephone, an email, a web page, a WeChat, etc., and set the queuing strategy of the pre-sales service through the platform cloud, for example, configuration, such as, queuing latitude strategy, pre-sales time, etc. It needs to be illustrated that, the platform cloud of the embodiment realizes that the user acquires contact center service corresponding to the assess number, depending on a computer telephony integration (CTI) technology and an interactive voice response (IVR) technology, and takes charge of the queuing strategy of the assess seats of the users through a seat intelligence selection (automatic call distribution, ACD) technology.

For the self-service, the platform cloud provides the enterprise with a service of allocating the self-service to the assess accounts which are already applied by the enterprise, and a service for configuring procedures of the self-service. Specifically, the platform cloud achieves that the user selects and acquires the contact center service according to the operation tips by using the IVR technology. Exemplarily, the user acquires the service information according to the voice prompt after dialing the access account of the automatic voice service activated by the enterprise; or, the user joins a self-service WeChat account activated by the enterprise, and acquires the service information corresponding to a string through sending the specific string to the self-service WeChat account.

As a preferred scheme, the platform cloud further provides the enterprise with a service of monitoring a service operation situation of the contact center, and a service of unloading a report of the service operation situation of the contact center. That is, the platform cloud calculates and records relevant information of the user acquiring the contact center service, such as, user information, seat information, staff information, service time, etc., and sends the information to the enterprise personnel through a report, thus achieving the scientific management of the service operation for the enterprise personnel.

To sum up, the interactive platform can include: a physical telephone, a soft telephone and a network communication application. The assess account of the physical phone is a fixed line phone number applied or leased by the enterprise from the telecom operator, and the user dials the fixed line number through the communication device to generate the call charges. The access account of the soft phone can be an IP phone number activated by the enterprise, and the access account of the network communication application can be an account of a mailbox or an instant messaging software, while the user generates the traffic costs.

The procedures of the enterprise personnel activating the contact center service through the cloud contact center of the embodiment of the present invention are described by combining with FIG. 2 hereinafter.

In step S201, the enterprise personnel online applies for an access account through the access cloud. Specifically, the enterprise personnel can directly select a previously applied access account from a resource pool of the access cloud, and the step S2011 is executed correspondingly; if there is no required access account (three party access account, such as, micro-blog, WeChat, etc.) in the resource pool of the access cloud, then step 2012 is executed: after the enterprise personnel proposes an application, the access cloud applies for an access account to the third party interactive platform serving end according to the materials provided by the enterprise personnel; and then step 2013 is executed, and the access cloud stores the assess account in the local resource pool after applying and acquiring the access account.

In step S202, the enterprise personnel configure the service resources for the access account on the platform cloud; for example, configuring the contact center service or seat for the access account.

In step S203, the enterprise personnel performs the online configuration of the contact center service procedures. For example, procedure configuration of automatic voice IVR, service menu and automatic service process of WeChat and micro-blog, automatic service process of webchat robot and others are performed on the access account of the self-service, seat group, service time, service strategy, queuing priority dimensionality of the manual service and others are configured for the access account of the manual service, and the contact center service is activated after the configuration is completed.

In step S204, the service cloud synchronously acquires the access account information after the configuration is completed from the platform cloud in real time, and provides the user with a query service.

In step S205, after the contact center service is activated, the enterprise personnel can log on the platform cloud to monitor the situation of the application resource usage and seat service whenever and wherever possible, to perform the report analysis.

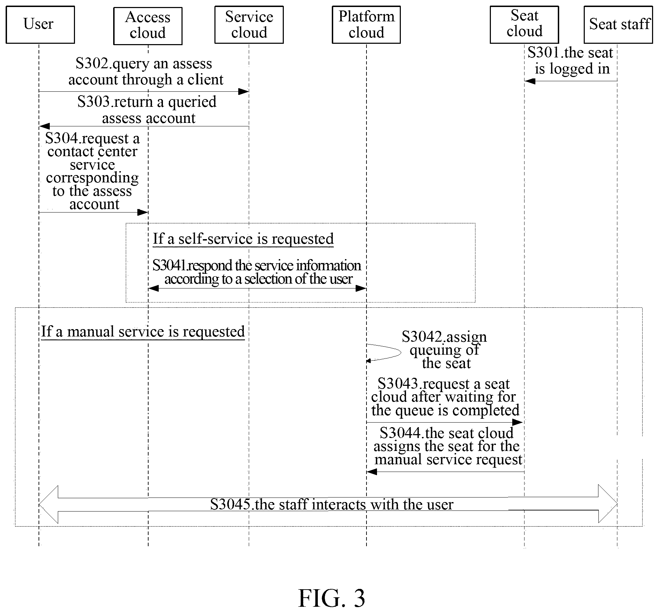

The procedures of the user acquiring the contact center service are described by combining with FIG. 3 hereinafter.

In step S301, the enterprise seat staff accesses the seat of the seat cloud whenever and wherever possible by using the communication terminal.

In step S302, the user queries the access account information of the enterprise to a service cloud through a client which is supported by the access cloud responsibly on his own terminal when it is needed to contact with the enterprise.

In step S303, the service cloud returns the access account information related to the enterprise keyword according to a query request submitted by the client.

In step S304, the user selects one access account to contact the enterprise according to an access account queried from the client and a contact center service corresponding to the access account. The access cloud interacts with the platform cloud according to the selection of the user through the client. In step S304, if the user selects to contact the access account corresponding to the self-service (such as, IVR, IVVR, WeChat related self-service or short message), then the step S3041 is executed; in step S304, if the user selects to contact the access account corresponding to the manual service, then the step S3042 to step S3045 are executed.

In step S3041, the platform cloud automatically provides the user with the appropriate service information according to the selection of the enterprise user.

In step S3042, the CTI module and the ACD module of the platform cloud assign the queuing to the user according to the seat situation of the enterprise, and waits for accessing to the corresponding seat staff.

In step S3043, after waiting for the queuing is completed, the platform cloud requests a free seat to the seat cloud according to the user attributes and the queuing strategy of the system.

In step S3044, the seat cloud assigns the free seat ID for the manual service request, and the manual service is bound with the free ID successfully.

In step S3045, the seat staff starts the interaction, such as, voice and text, etc., with the user, to perform the manual service.

In summary, the cloud contact center of the embodiment of the present invention can activate all types of contact center services in a low cost quickly for the enterprise, and it is convenient for the user to query the enterprise number to contact the enterprise through the client.

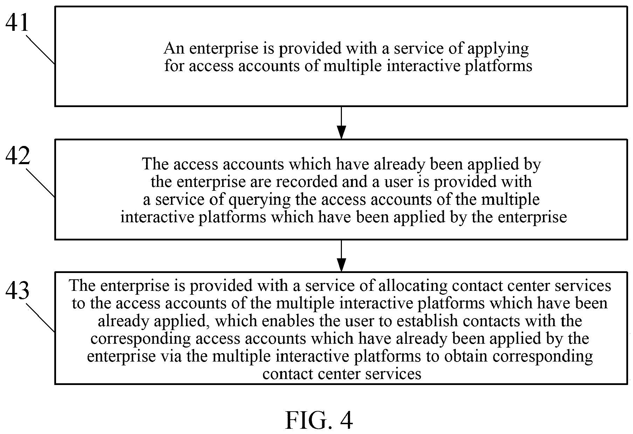

In addition, another embodiment of the present invention further provides a cloudization method for a contact center, as shown in FIG. 4, including the following steps.

In step 41, an enterprise is provided with a service of applying for access accounts of a plurality of types of interactive platforms.

In step 42, the access accounts which have been already applied by the enterprise are recorded and a user is provided with a service of querying the access accounts of the plurality of types of interactive platforms which have been applied by the enterprise.

In step 43, the enterprise is provided with a service of allocating contact center services to the access accounts of the plurality of types of interactive platforms which have been already applied, which enables the user to establish contacts with the corresponding access accounts which have been applied by the enterprise via the plurality of types of interactive platforms to obtain corresponding contact center services.

It can be known from the above descriptions that, for the enterprise, the method of the embodiment of the present invention intensively manages the contact center services of various interactive platforms, thereby saving the operation costs of the enterprise. While for the user, the method of the embodiment of the present invention is convenient for the user to learn access accounts of the enterprise for various interactive platforms, and the user is enabled to select an appropriate interactive platform to acquire an appropriate contact center service.

Specifically, the contact center service includes a manual service; and the method of the embodiment further provides multiple seats, and provides the enterprise with a service of binding a communication terminal of the seat staff with the seat.

In the above step 43, specifically the enterprise is provided with a service of allocating the manual service to the assess accounts which are already applied by the enterprise, a service of binding the access accounts which are already applied by the enterprise allocated with the manual service with the seat of the seat cloud, and a service of configuring a queuing policy required by the user contacting the access accounts which are already applied by the enterprise allocated with the manual service.

In addition, the contact center service includes a self-service.

In the above step 43, specifically the enterprise is provided with a service of allocating the self-service to the assess accounts which have been already applied by the enterprise, and a service for configuring procedures of the self-service.

As a preferred scheme, the method of the embodiment of the present invention further provides the enterprise with a service of monitoring an operation situation of the contact center service, and a service of uploading a report of the service operation situation of the contact center, thus achieving the scientific management of the service operation for the enterprise personnel.

Herein, the interactive platform can include: a physical telephone, a soft telephone and a network communication application. The assess account of the physical phone is a fixed line phone number applied or leased by the enterprise from the telecom operator, and the user dials the fixed line number through the communication device to generate the call charges. The access account of the soft phone can be an IP phone number activated by the enterprise, and the access account of the network communication application can be an account of a mailbox or an instant messaging software, while the user generates the traffic costs.

Obviously, the method of the present embodiment corresponds to the cloud contact center of the embodiment of the present invention, and the present method can same achieve the technical effect that can be achieved by the cloud contact center.

The above description is the preferable embodiments of the present invention. It should be pointed out that, for those skilled in the art, a plurality of modifications and retouches also can be made without departing from the described principles of the present invention, and all the modifications and retouches should be embodied in the scope of the present invention.

### Industrial Applicability

As mentioned above, a cloud contact center and cloudization method for a contact center provided by the embodiment of the present invention have the following beneficial effects: for the enterprise, in the solution of the present invention, the contact center services of various interactive platforms are intensively managed, thereby saving operation costs of an enterprise; while for the user, the scheme of the present invention is convenient for the user to learn access accounts of the enterprise for various interactive platforms, and the user is enabled to select an appropriate interactive platform to acquire an appropriate contact center service.

## Claims

1. A cloud contact center, comprising:
an access cloud, arranged to: provide an enterprise with a service of applying for access accounts of a plurality of types of interactive platforms;
a service cloud, in which the access accounts which have already been applied by the enterprise are recorded, arranged to: provide a user with a service of querying the access accounts of the plurality of types of interactive platforms which have been applied by the enterprise; and
a platform cloud, arranged to: provide the enterprise with a service of allocating contact center services to the access accounts of the plurality of types of interactive platforms which have already been applied, enable the user to establish contacts with corresponding access accounts which have already been applied by the enterprise via the plurality of types of interactive platforms and obtain corresponding contact center services.

2. The cloud contact center according to claim 1, wherein, the contact center service comprises a manual service; the cloud contact center further comprises:
a seat cloud, with multiple seats, arranged to provide the enterprise with a service of binding a communication terminal of a seat staff with the seat; and
the platform cloud specifically providing the enterprise with a service of allocating the manual service to the assess accounts which have already been applied by the enterprise, a service of binding the access accounts which have already been applied by the enterprise allocated with the manual service with the seat of the seat cloud, and a service of configuring a queuing policy required for the user to contact the access accounts which have already been applied by the enterprise and are allocated with the manual service.

3. The cloud contact center according to claim 1, wherein, the contact center service comprises a self-service; and
the platform cloud specifically provides the enterprise with a service of allocating the self-service to the assess accounts which have already been applied by the enterprise, and a service for configuring procedures of the self-service.

4. The cloud contact center according to claim 1, wherein, the interactive platform comprises: a physical telephone, a soft telephone and a network communication application.

5. The cloud contact center according to claim 1, wherein,
the platform cloud further provides the enterprise with a service of monitoring an operation situation of the contact center service, and a service of uploading a report of the operation situation of the contact center service.

6. A cloudization method for a contact center, comprising:
providing an enterprise with a service of applying for access accounts of a plurality of types of interactive platforms;
recording the access accounts which have already been applied by the enterprise and providing a user with a service of querying the access accounts of the plurality of types of interactive platforms which have been applied by the enterprise; and
providing the enterprise with a service of allocating contact center services to the access accounts of the plurality of types of interactive platforms which have already been applied, enabling the user to establish contacts with corresponding access accounts which have already been applied by the enterprise via the plurality of types of interactive platforms and obtaining corresponding contact center services.

7. The cloudization method according to claim 6, wherein, the contact center service comprises a manual service; and the method further comprises:
providing multiple seats, and providing the enterprise with a service of binding a communication terminal of a seat staff with the seat; and
the providing the enterprise with a service of allocating contact center services to the access accounts of the plurality of types of interactive platforms which have already been applied comprises:
providing the enterprise with a service of allocating the manual service to the assess accounts which have already been applied by the enterprise, a service of binding the access accounts which have already been applied by the enterprise allocated with the manual service with the seat of the seat cloud, and a service of configuring a queuing policy required for the user to contact the access accounts which have already been applied by the enterprise and are allocated with the manual service.

8. The cloudization method according to claim 6, wherein, the contact center service comprises a self-service; and
the providing the enterprise with a service of allocating contact center services to the access accounts of the plurality of types of interactive platforms which have already been applied comprises:
providing the enterprise with a service of allocating the self-service to the assess accounts which have already been applied by the enterprise, and a service for configuring procedures of the self-service.

9. The cloudization method according to claim 6, wherein, the interactive platform comprises: a physical telephone, a soft telephone and a network communication application.

10. The cloudization method according to claim 6, further comprising:
further providing the enterprise with a service of monitoring an operation situation of the contact center service, and a service of uploading a report of the operation situation of the contact center service.
